# DEMANDE DE BREVET EUROPEEN

(11) **EP 1 932 687 A1**
(43) Date de publication de la demande: **18.06.2008**
(21) Numéro de dépôt: 07122996.7
(22) Date de dépôt: 12.12.2007
(51) Int. Cl.: B60C 7/10

(54) **Bandage de roulement pour cycle, roue de cycle comportant un tel bandage et cycle comportant une telle roue**

(30) Priorité: 13.12.2006 FR 0610880
(71) Demandeur: JCDecaux SA, 92200 Neuilly-Sur-Seine (FR)
(72) Inventeur: Gagosz, Jean-Claude, 28140, BU (FR); Zeferino, Emmanuel, 78180, MONTIGNY LE BRETONNEUX (FR); Darbon, Anthonin, 69004, LYON (FR)
(74) Mandataire: Cabinet Plasseraud

(57) **Abrégé**

Bandage de roulement pour cycle, comprenant un insert (10) qui comporte un tronçon cylindrique en élastomère destiné à être installé autour d'une jante (6) de roue de cycle à l'intérieur d'une enveloppe annulaire externe (9) fixée à la jante, cet insert comportant au moins deux extrémités axiales (11,12) reliées entre elles. Un dispositif de précontrainte (13) est adapté pour exercer sur les extrémités axiales de l'insert une précontrainte tendant à les écarter l'une de l'autre, ce dispositif de précontrainte (13) étant commandé par un organe d'actionnement (19) pour sélectivement déclencher la précontrainte.

## Description

La présente invention est relative aux bandages de roulement pour cycles, aux roues de cycles comportant de tels bandages et aux cycles comportant de telles roues.

Plus particulièrement, l'invention concerne un bandage de roulement pour cycle, comprenant un insert qui comporte au moins un tronçon cylindrique en élastomère (naturel ou de synthèse) destiné à être installé autour d'une jante de roue de cycle, à l'intérieur d'une enveloppe annulaire externe fixée à la jante, ledit insert comportant au moins deux extrémités axiales reliées entre elles pour donner audit insert une forme annulaire.

Le document US-A-4 324 279 décrit un exemple d'un tel insert, qui présente des dimensions légèrement supérieures aux dimensions intérieures de l'enveloppe, de façon à exercer sur l'enveloppe une précontrainte de tension. La mise en place de l'enveloppe autour de cet insert peut s'avérer difficile, compte tenu de cette précontrainte. De plus, la valeur de la précontrainte exercée par l'insert sur l'enveloppe est difficile à contrôler avec précision.

La présente invention a notamment pour but de pallier ces inconvénients.

A cet effet, selon l'invention, un insert du genre en question est caractérisé en ce qu'il comporte au moins un dispositif de précontrainte adapté pour exercer sur lesdites extrémités axiales de l'insert, une précontrainte tendant à écarter lesdites extrémités axiales l'une de l'autre, le dispositif de précontrainte étant commandé par un organe d'actionnement pour sélectivement déclencher ladite précontrainte.

Grâce à ces dispositions, on facilite la mise en place de l'enveloppe autour de l'insert (avant mise en précontrainte de l'insert) et on peut contrôler plus précisément la valeur de la précontrainte.

Dans divers modes de réalisation du dispositif anti-vandalisme selon l'invention, on peut éventuellement avoir recours en outre à l'une et/ou à l'autre des dispositions suivantes :
- le dispositif de précontrainte comporte des premier et deuxième organes d'appui agissant respectivement sur lesdites extrémités axiales, lesdits organes d'appui étant sollicités élastiquement à l'écartement mutuel, l'organe d'actionnement étant adapté pour sélectivement bloquer ou débloquer un mouvement relatif entre les deux organes d'appui ;
- le dispositif de précontrainte comporte en outre un ressort hélicoïdal de compression interposé entre les deux organes d'appui ;
- le dispositif de précontrainte comporte en outre un vérin à gaz interposé entre les deux organes d'appui ;
- les deux organes d'appui se présentent sous la forme de douilles respectivement intérieure et extérieure comprenant respectivement deux parois latérales annulaires emboîtées l'une dans l'autre ;
- les deux douilles sont emboîtées respectivement dans lesdites extrémités axiales de l'insert ;
- l'organe d'actionnement est une vis qui, en position de blocage, traverse la paroi latérale de la douille extérieure et bloque la paroi latérale de la douille intérieure ;
- les deux douilles comportent respectivement deux faces axiales disposées à l'opposé l'une de l'autre, le dispositif de précontrainte comportant en outre un dispositif élastique de compression logé dans les deux douilles et venant en appui intérieur respectivement sur lesdites faces axiales des douilles ;
- le dispositif de précontrainte est doté d'un système anti-retour empêchant les deux organes d'appui de revenir l'un vers l'autre après déclenchement de la précontrainte ;
- le premier organe d'appui comporte un premier logement dans lequel est monté mobile ledit organe d'actionnement tandis que le deuxième organe d'appui comporte une série de deuxièmes logements alignés en correspondance avec le premier logement dans une direction de coulissement relatif entre les premier et deuxième organes d'appui, chaque deuxième logement étant adapté pour recevoir partiellement l'organe d'actionnement, ledit organe d'actionnement étant déplaçable dans le premier logement entre, d'une part, une position escamotée où ledit organe d'actionnement n'interfère pas avec le deuxième organe d'appui, et d'autre part, une position de blocage où ledit organe d'actionnement pénètre partiellement dans l'un desdits deuxièmes logements, ledit organe d'actionnement étant sollicité élastiquement vers sa position de blocage et étant accessible pour être repoussé manuellement vers sa position escamotée, au moins avant déclenchement de la précontrainte ;
- l'organe d'actionnement est une bille rigide ;
- l'insert comporte une partie centrale pleine et plusieurs évidements toriques répartis en périphérie de ladite partie centrale pleine ;
- lesdits évidements toriques sont en nombre compris entre 4 et 6 ;
- lesdits évidements toriques, vus en section, sont répartis régulièrement sur un cercle ;
- le dispositif de précontrainte comporte deux organes d'appui agissant respectivement sur lesdites extrémités axiales, lesdits organes d'appui étant séparés l'un de l'autre par une calle en forme de coin, et ledit dispositif d'actionnement étant adapté pour déplacer la calle en forme de coin de façon à écarter lesdits organes d'appui l'un de l'autre ;
- le dispositif de précontrainte comprend une poche déformable logée entre les extrémités axiales de l'insert et pouvant être gonflée par l'intermédiaire d'une valve, laquelle constitue l'organe d'actionnement.

Par ailleurs, l'invention a également pour objet une roue de cycle comportant une jante et un bandage de roulement tel que défini ci-dessus, fixé à la jante, ledit bandage de roulement comportant en outre une enveloppe annulaire externe fixée à la jante, l'insert occupant un volume annulaire intérieur délimité entre la jante et l'enveloppe externe.

Avantageusement, l'organe d'actionnement de l'insert peut être accessible par un orifice ménagé dans la jante (par exemple, un orifice servant habituellement au passage d'une valve de gonflage).

Enfin, l'invention a encore pour objet un cycle comportant au moins une roue telle que définie ci-dessus.

D'autres caractéristiques et avantages de l'invention apparaîtront au cours de la description suivante de plusieurs de ses modes de réalisation, donnés à titre d'exemples non limitatifs, en regard des dessins joints.

Sur les dessins :
- la figure 1 est une vue en perspective d'un exemple de cycle dont la roue est équipée d'un bandage de roulement selon une forme de réalisation de l'invention,
- la figure 2 est une vue schématique montrant l'une des roues du cycle de la figure 1,
- la figure 3 est une vue partielle en coupe radiale de la roue de la figure 2, avant déclenchement de la précontrainte de l'insert de cette roue,
- la figure 4 est une vue similaire à la figure 3, montrant la roue après déclenchement de la précontrainte de l'insert,
- la figure 5 est une vue en coupe transversale de l'insert de la roue des figures 2 à 4, en section courante,
- la figure 6 est une vue en coupe longitudinale d'un dispositif de précontrainte utilisable dans une deuxième forme de réalisation de l'invention,
- la figure 7 est une vue en coupe selon la ligne VII-VII de la figure 6,
- et les figures 8 et 9 sont des vues similaires à la figure 3, dans des troisième et quatrième formes de réalisation de l'invention.

Sur les différentes figures, les mêmes références désignent des éléments identiques ou similaires.

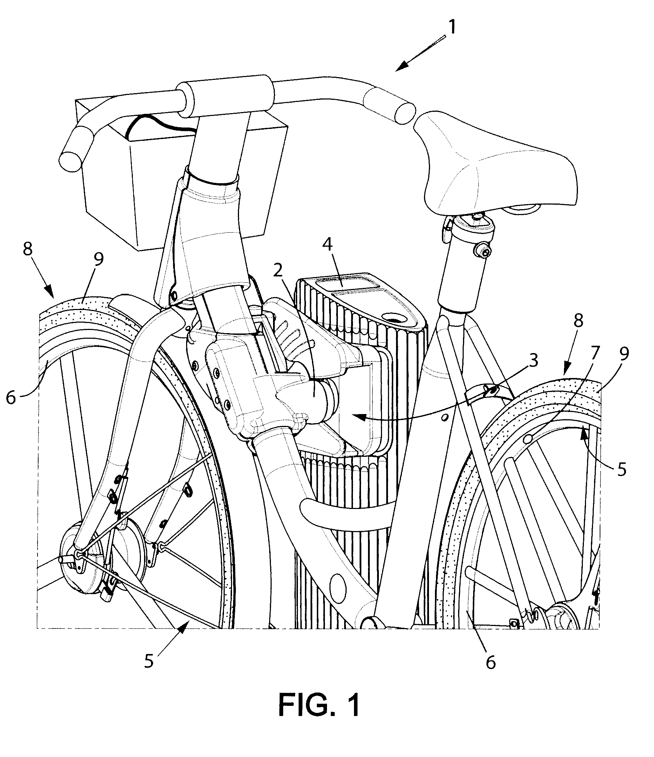

Comme représenté sur la figure 1, l'invention concerne un cycle, par exemple une bicyclette, et notamment une bicyclette destinée à être mise à disposition du public (cette bicyclette peut comporter par exemple, un dispositif de verrouillage 2 adapté pour venir en prise avec un dispositif de verrouillage complémentaire 3 appartenant à des bornes 4 fixées au sol dans des aires de stockage de bicyclettes sur la voie publique).

Les roues 5 de la bicyclette 1 comporte chacune une jante 6 recouverte extérieurement par un bandage de roulement 8.

Chaque jante 6 comporte au moins un orifice 7 orienté radialement vers l'intérieur et servant habituellement au passage d'une valve de gonflage lorsque le bandage de roulement est de type pneumatique.

Le bandage de roulement 8 comporte une enveloppe extérieure 9 qui est fixée à la jante 6 et qui délimite avec celle-ci un volume intérieur creux de forme torique, recevant habituellement une chambre à air.

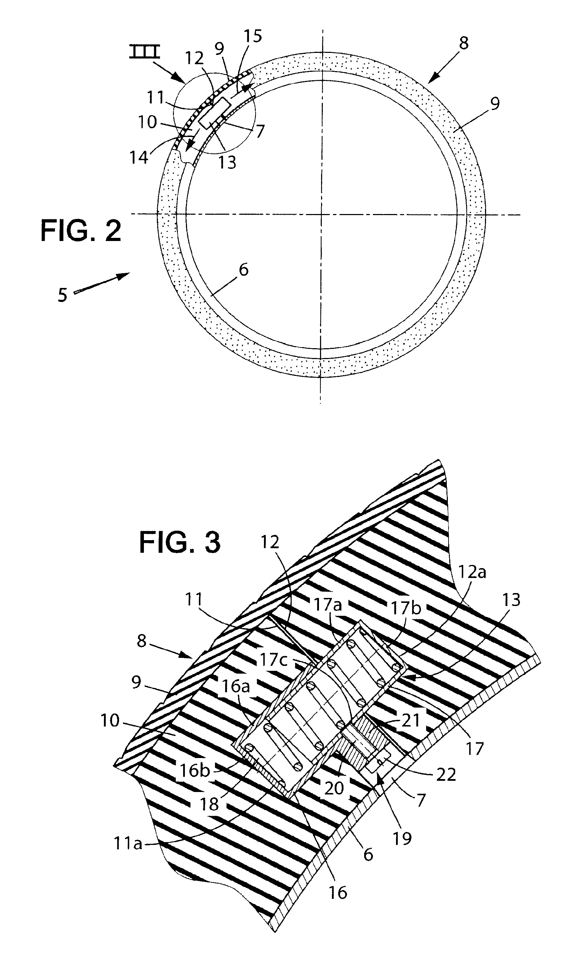

Selon l'invention, on remplace la chambre à air par un insert en élastomère 10 dépourvu de poche d'air sous pression, bien visible sur les figures 2 et 3 -cet insert 10 peut être réalisé par exemple en un matériau à base de caoutchouc naturel ou d'élastomère de synthèse-. L'insert 10 se présente sous la forme d'un tronçon cylindrique qui s'étend entre deux extrémités axiales 11, 12 et qui est enroulé sur lui-même de façon que ses deux extrémités axiales soient disposées en regard l'une de l'autre. Le montage de l'insert 10 sur la jante 6 est donc aisé.

Les dimensions transversales de l'insert 10 sont adaptées pour que l'insert, au repos, remplisse sensiblement tout l'espace entre la jante 6 et l'enveloppe externe 9, sans exercer de contrainte sensible sur ladite enveloppe 9. On facilite ainsi le montage de l'enveloppe 9 autour de l'insert 10.

Comme représenté sur la figure 2, entre les extrémités 11, 12, de l'insert 10 est disposé un dispositif de précontrainte 13 qui, après mise en fonctionnement, sollicite lesdites extrémités 11, 12 à l'écartement mutuel, dans le sens des flèches 14, 15, en exerçant ainsi sur l'insert 10 une précontrainte de compression qui se traduit par une précontrainte de tension exercée à l'intérieur de l'enveloppe 9. Une telle précontrainte permet d'améliorer la durée de vie du bandage de roulement et d'améliorer le confort pour l'utilisateur du cycle.

Pour faciliter le montage de l'enveloppe 9 sur la roue 5, le dispositif de précontrainte 13 est initialement bloqué par un organe d'actionnement qui l'empêche d'exercer sa précontrainte.

Dans l'exemple représenté sur la figure 3, le dispositif de précontrainte 13 comporte deux douilles métalliques 16, 17 comprenant respectivement des parois latérales annulaires 16a, 17a et des parois d'extrémité 16b, 17b disposées à l'opposé l'une de l'autre. Les parois latérales 16a, 17a des douilles sont montées coulissantes l'une dans l'autre et délimitent un volume intérieur creux dans lequel est logé un ressort de compression hélicoïdal 18 dont les extrémités axiales appuient intérieurement sur les faces d'extrémités 16b, 17b des deux douilles.

Avant montage de l'insert 10 dans la roue 5, le coulissement relatif des deux douilles 16, 17 est empêché par une vis 19 qui constitue ici l'organe d'actionnement susmentionné et qui traverse les parois latérales des deux douilles. Plus précisément, la vis 19 comporte une tige filetée 20 qui est vissée dans une partie épaissie 21 de la paroi latérale 16a de la première douille et qui pénètre dans un évidement 17c de la paroi latérale de la deuxième douille. La tête 22 de la vis 19 est accessible depuis l'extérieur de la roue au travers de l'orifice 7 susmentionné de la jante. Lors de la mise en place de l'insert 10 autour de la jante 6, les douilles 16, 17 sont emboîtées dans deux évidements centraux 11a, 12a de forme correspondante, ménagés aux deux extrémités axiales 11, 12, du tronçon cylindrique d'élastomère formant l'insert.

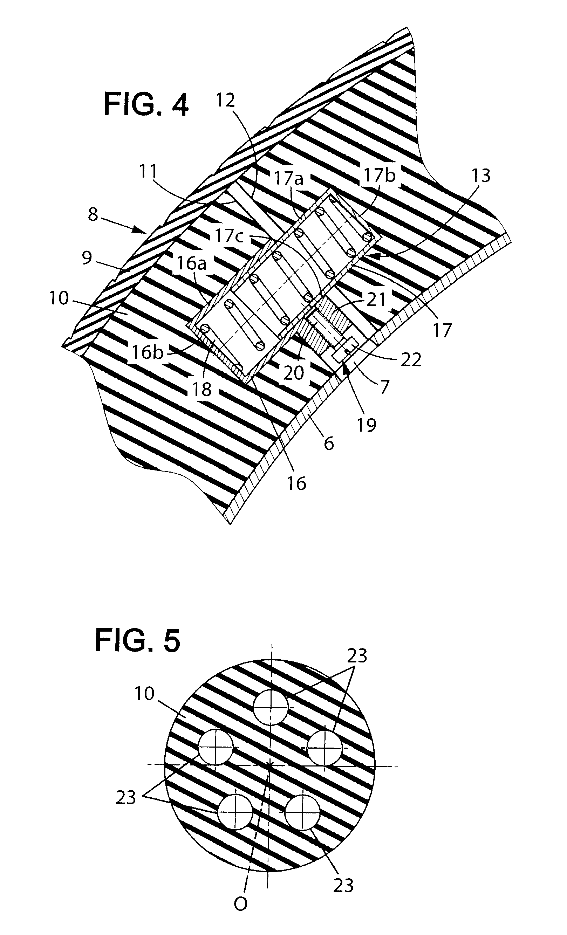

Après mise en place de l'insert, l'enveloppe 9 est fixée à la jante 6 autour de l'insert 10, puis, comme représenté sur la figure 4, on dévisse partiellement la vis 19 au travers de l'orifice 7, ce qui libère le coulissement relatif entre les douilles 16, 17 qui agissent ainsi à l'écartement mutuel sur les extrémités 11, 12 de l'insert 10, en générant ainsi la précontrainte susmentionnée.

On notera que l'insert 10 pourrait comporter plusieurs tronçons cylindriques aboutés les uns aux autres autour de la jante 6 et reliés entre eux par un ou plusieurs dispositifs de précontrainte 13.

On notera également que le dispositif de précontrainte 13 peut être de forme quelconque, que son organe d'actionnement peut être différent d'une vis et que la précontrainte peut être générée par un moyen autre qu'un ressort de compression métallique, par exemple par un vérin pneumatique, un dispositif hydraulique, un dispositif pyrotechnique, ou autre.

On notera également que les douilles 16, 17, ou tout autre organe d'appui appartenant au dispositif de précontrainte pourraient comporter un système anti-retour empêchant ces organes d'appui de revenir l'un vers l'autre après déclenchement de la précontrainte.

Comme représenté sur la figure 5, pour améliorer le confort procuré au cycliste et la résistance de l'insert 10, celui-ci ne comporte pas d'évidement torique central, mais au contraire une pluralité d'évidements toriques 23, décalés chacun par rapport au centre O de la section transversale de l'insert 10. On améliore ainsi l'élasticité de l'insert 10, dans le sens radial par rapport à l'axe de rotation de la roue.

Ces évidements toriques 23 peuvent par exemple être en nombre compris entre 4 et 6, et être répartis régulièrement à égale distance du centre O de la section de l'insert 10.

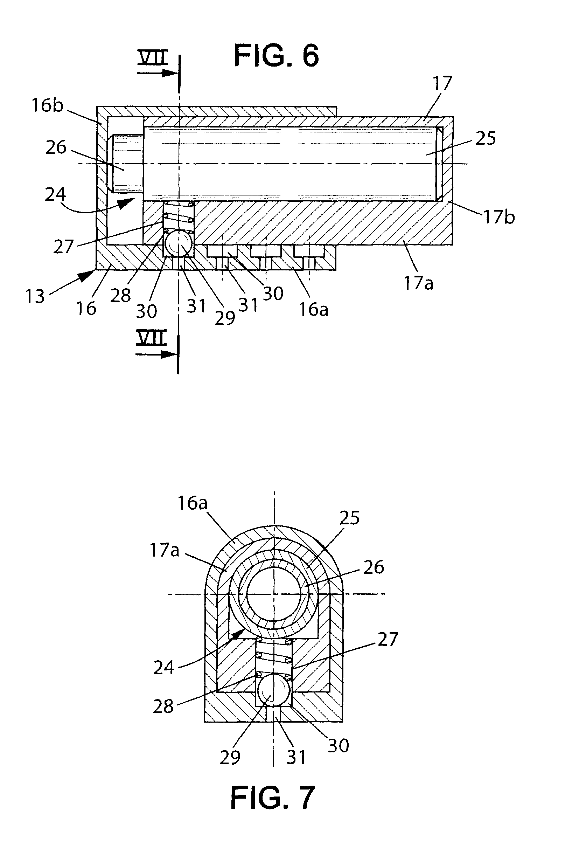

Dans la deuxième forme de réalisation de l'invention, le cycle 1, la jante 6, l'enveloppe 9 et l'insert 10 sont identiques ou similaires à ceux décrits précédemment et ne seront donc pas décrits à nouveau. Dans cette deuxième forme de réalisation de l'invention, le dispositif de précontrainte 13, visible sur les figures 6 et 7, comporte deux douilles métalliques 16, 17 emboîtées l'une dans l'autre et présentant de préférence des formes non cylindriques de révolution de façon à indexer angulairement ces deux douilles l'une par rapport à l'autre. Dans l'espace intérieur laissé libre par ces deux douilles peut être logé par exemple un vérin à gaz 24 ou autre, dont les deux cylindriques 25, 26 sollicitent respectivement les douilles 16, 17 à l'écartement mutuel.

Dans la paroi latérale 17a de la douille 17 est en outre ménagé un logement cylindrique 27 qui contient un ressort de compression 28 prenant appui sur la paroi latérale du cylindre 25 et sollicitant une bille métallique 29 vers un logement 30 ménagé dans la paroi latérale 16a de la douille 16.

Au repos, la bille 29 est partiellement engagée dans les logements 27, 30, et empêche ainsi un coulissement relatif entre les douilles 16, 17. Le logement 30 communique en outre avec l'orifice 7 susmentionné par un passage 31 de diamètre réduit ménagé dans la paroi latérale 16a de la douille 16.

Après installation de l'insert 10 et de l'enveloppe 9 autour de la jante 6, un opérateur peut ainsi appuyer sur la bille 10 au moyen d'un outil en forme de tige, de sorte que la bille 29 est déplacée jusqu'à une position escamotée où elle est entièrement comprise dans le logement 27. Le vérin à gaz 24 déplace alors brutalement les douilles 16, 17 en les écartant l'une de l'autre, jusqu'à ce que l'insert 10 soit en précontrainte de compression comme représenté sur la figure 4 dans le premier mode de réalisation de l'invention.

Pour éviter que les douilles 16, 17. Ainsi, en fin de mouvement d'écartement des douilles 16, 17 ne reviennent à leur position de départ du fait de l'élasticité du vérin à gaz 24 en cours d'utilisation du cycle, on peut le cas échéant prévoir une série de logements 30 alignés selon l'axe de coulissement relatif des douilles 16, 17.

Ainsi, en fin de mouvement d'écartement des douilles 16, 17 ou au cours des petits mouvements à faible vitesse qui peuvent avoir lieu ultérieurement entre les deux douilles 16, 17 au début de l'utilisation du cycle, la bille 29 peut venir se loger dans l'un de ces logements 30 et immobilise les douilles 16, 17 l'une par rapport à l'autre. On notera que les logements 30 autres que celui qui reçoit la bille 29 avant déclenchement de la précontrainte pourraient être dépourvus du passage 31 susmentionné.

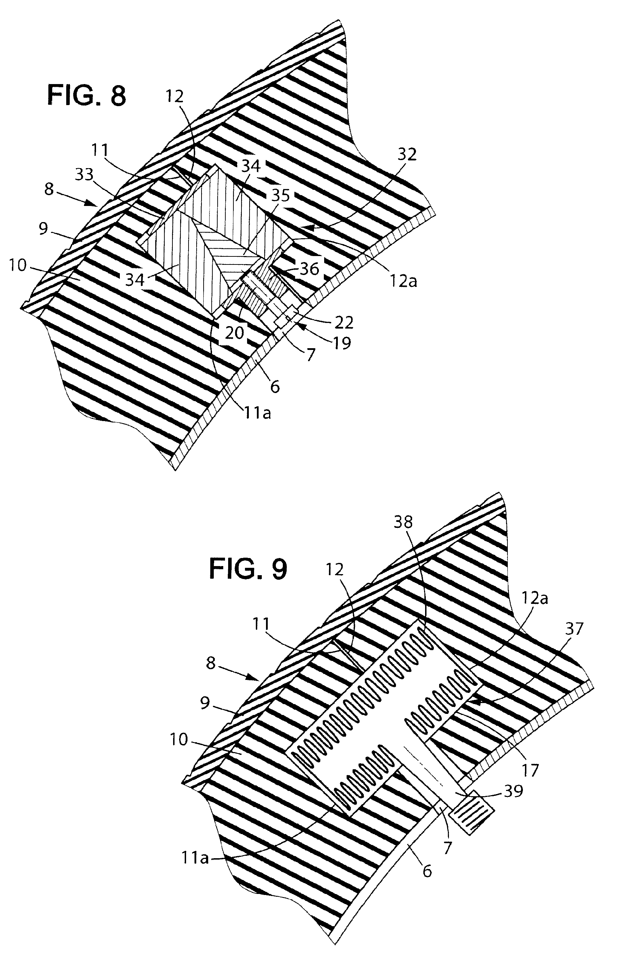

Dans la troisième forme de réalisation de l'invention, représentée sur la figure 8, le dispositif de précontrainte 32 comporte une bague cylindrique 33 creuse dans laquelle sont montés deux coulisseaux 34 délimitant entre eux un espace en forme de coin dans lequel est engagée une calle 35 elle-même en forme de coin. La bague cylindrique 33 comporte une partie épaissie 36 qui est traversée par la tige filetée d'une vis 19 qui appuie sur la partie la plus large de la calle 35. La tête 22 de la vis 19 est accessible par l'évidement 7 susmentionné de la jante 6 de la roue du cycle.

Le dispositif de précontrainte 32 est emboîté dans deux évidements centraux ménagés aux deux extrémités axiales 11, 12 du tronçon cylindrique d'élastomère formant l'insert 10, et, pour mettre cet insert en précontrainte (ou pour augmenter une précontrainte éventuellement déjà existante de cet insert), on visse la vis 19 de façon à repousser la calle 35, ce qui par effet de coin repousse les coulisseaux 34 à l'opposé l'un de l'autre en mettant l'insert 10 en précontrainte.

Dans la quatrième forme de réalisation de l'invention, représentée sur la figure 9, le dispositif de précontrainte 37 est constitué par une poche déformable 38 réalisée par exemple en élastomère, qui communique avec une valve de gonflage 39 telle que celles utilisées habituellement pour le gonflage des chambres à air de cycle.

La poche déformable 38 est logée entre les faces 11, 12 de l'insert 10, par exemple dans des évidements centraux 11a, 12a ménagés dans ces faces 11, 12.

Pour mettre l'insert 10 en précontrainte, il suffit de gonfler la poche 38 par la valve 39, par exemple au moyen d'une pompe manuelle ou d'un circuit d'air comprimé.

## Revendications

1. Bandage de roulement pour cycle, comprenant un insert (10) qui comporte au moins un tronçon cylindrique en élastomère destiné à être installé autour d'une jante (6) de roue de cycle, à l'intérieur d'une enveloppe annulaire externe (9) fixée à la jante, ledit insert (10) comportant au moins deux extrémités axiales (11, 12) reliées entre elles pour donner audit insert (10) une forme annulaire,
**caractérisé en ce qu'**il comporte en outre au moins un dispositif de précontrainte (13; 32 ; 37) adapté pour exercer sur lesdites extrémités axiales (11, 12) de l'insert, une précontrainte tendant à écarter lesdites extrémités axiales l'une de l'autre, le dispositif de précontrainte (13 ; 32 ; 37) étant commandé par un organe d'actionnement (19 ; 29 ; 39) pour sélectivement déclencher ladite précontrainte.

2. Bandage de roulement selon la revendication 1, dans lequel le dispositif de précontrainte (13) comporte des premier et deuxième organes d'appui (16, 17) agissant respectivement sur lesdites extrémités axiales (11, 12), lesdits organes d'appui (16, 17) étant sollicités élastiquement à l'écartement mutuel, l'organe d'actionnement (19 ; 29) étant adapté pour sélectivement bloquer ou débloquer un mouvement relatif entre les deux organes d'appui (16, 17).

3. Bandage de roulement selon la revendication 2, dans lequel le dispositif de précontrainte (13) comporte en outre un ressort hélicoïdal de compression (18) interposé entre les deux organes d'appui (16, 17).

4. Bandage de roulement selon la revendication 2, dans lequel le dispositif de précontrainte comporte en outre un vérin à gaz (24) interposé entre les deux organes d'appui (16, 17).

5. Bandage de roulement selon l'une quelconque des revendications 2 à 4, dans lequel les deux organes d'appui (16, 17) se présentent sous la forme de douilles respectivement intérieure (17) et extérieure (16) comprenant respectivement deux parois latérales annulaires (16a, 17a) emboîtées l'une dans l'autre.

6. Bandage de roulement selon la revendication 5, dans lequel les deux douilles (16, 17) sont emboîtées respectivement dans lesdites extrémités axiales (11, 12) de l'insert.

7. Bandage de roulement selon la revendication 5 ou la revendication 6, dans lequel l'organe d'actionnement (19) est une vis qui, en position de blocage, traverse la paroi latérale (16a) de la douille extérieure et bloque la paroi latérale (17a) de la douille intérieure.

8. Bandage de roulement selon la revendication 5 ou la revendication 6, dans lequel les deux douilles (16, 17) comportent respectivement deux faces axiales (16b, 17b) disposées à l'opposé l'une de l'autre, le dispositif de précontrainte comportant en outre un dispositif élastique de compression (18 ; 24) logé dans les deux douilles et venant en appui intérieur respectivement sur lesdites faces axiales des douilles.

9. Bandage de roulement selon l'une quelconque des revendications 2 à 8, dans lequel le dispositif de précontrainte (13) est doté d'un système anti-retour (27, 28, 29, 30) empêchant les deux organes d'appui (16, 17) de revenir l'un vers l'autre après déclenchement de la précontrainte.

10. Bandage de roulement selon l'une quelconque des revendications 2 à 9, dans lequel le premier organe d'appui (17) comporte un premier logement (27) dans lequel est monté mobile ledit organe d'actionnement (29) tandis que le deuxième organe d'appui (16) comporte une série de deuxièmes logements (30) alignés en correspondance avec le premier logement (27) dans une direction de coulissement relatif entre les premier et deuxième organes d'appui (16, 17), chaque deuxième logement (30) étant adapté pour recevoir partiellement l'organe d'actionnement (29), ledit organe d'actionnement étant déplaçable dans le premier logement (27) entre, d'une part, une position escamotée où ledit organe d'actionnement n'interfère pas avec le deuxième organe d'appui (16), et d'autre part, une position de blocage où ledit organe d'actionnement pénètre partiellement dans l'un desdits deuxièmes logements (30), ledit organe d'actionnement (29) étant sollicité élastiquement vers sa position de blocage et étant accessible pour être repoussé manuellement vers sa position escamotée, au moins avant déclenchement de la précontrainte.

11. Bandage de roulement selon la revendication 10, dans lequel l'organe d'actionnement (29) est une bille rigide.

12. Bandage de roulement selon l'une quelconque des revendications précédentes, dans lequel l'insert (10) comporte une partie centrale pleine et plusieurs évidements toriques (23) répartis en périphérie de ladite partie centrale pleine.

13. Bandage de roulement selon la revendication 12, dans lequel lesdits évidements toriques (23) sont en nombre compris entre 4 et 6.

14. Bandage de roulement selon la revendication 12 ou la revendication 13, dans lequel lesdits évidements toriques (23), vus en section, sont répartis régulièrement sur un cercle.

15. Bandage de roulement selon la revendication 1, dans lequel le dispositif de précontrainte (32) comporte deux organes d'appui (34) agissant respectivement sur lesdites extrémités axiales (11, 12), lesdits organes d'appui étant séparés l'un de l'autre par une calle (35) en forme de coin, et ledit dispositif d'actionnement étant adapté pour déplacer la calle (35) en forme de coin de façon à écarter lesdits organes d'appui (34) l'un de l'autre.

16. Bandage de roulement selon la revendication 1, dans lequel le dispositif de précontrainte (37) comprend une poche déformable (38) logée entre les extrémités axiales (11, 12) de l'insert (10) et pouvant être gonflée par l'intermédiaire d'une valve (39), laquelle constitue l'organe d'actionnement.

17. Roue de cycle comportant une jante (6) et un bandage de roulement (8) selon l'une quelconque des revendications précédentes, fixé à la jante, ledit bandage de roulement comportant en outre une enveloppe annulaire externe (9) fixée à la jante (6), l'insert (10) occupant un volume annulaire intérieur délimité entre la jante (6) et l'enveloppe externe (9).

18. Roue selon la revendication 17, dans laquelle l'organe d'actionnement (19, 29) de l'insert est accessible par un orifice ménagé dans la jante (6).

19. Cycle comportant au moins une roue (5) selon l'une quelconque des revendications 17 et 18.
